# FASCICULE DE BREVET EUROPEEN

(11) **EP 1 918 087 B1**
(45) Date de publication et mention de la délivrance du brevet: **31.12.2008**
(21) Numéro de dépôt: 07119503.6
(22) Date de dépôt: 29.10.2007
(51) Int. Cl.: B29D 30/06, B29C 33/30

(54) **Moule pour la vulcanisation d'un pneumatique et procédé de vulcanisation d'une ébauche crue de pneumatique**
Form für die Vulkanisierung eines Reifens und Verfahren zur Vulkanisierung eines Reifenrohlings
Mould for vulcanising a tyre and method for vulcanising a green body of a tyre

(30) Priorité: 02.11.2006 FR 0654700; 18.01.2007 US 881074 P
(43) Date de publication de la demande: 07.05.2008
(73) Titulaire: Société de Technologie Michelin, 63000 Clermont-Ferrand (FR); Michelin Recherche et Technique S.A., 1763 Granges-Paccot (CH)
(72) Inventeur: Menard, Gilbert, 63530 Volvic (FR); Alegre, Gérard, 63100 Clermont-Ferrand (FR); Mondolo, Adrien, 63100 Clermont-Ferrand (FR); Aperce, Jean-Claude, 63430 Pont-du-Chateau (FR); Ferrand, Jean-Charles, 63200 Riom (FR)
(74) Mandataire: de la Bigne, Guillaume Michel Marie

(56) Documents cités:
- EP-A1- 0 436 495
- AU-B2- 452 453
- DE-A1- 2 502 185
- FR-A- 1 453 942
- GB-A- 1 333 228
- US-A- 3 867 504

## Description

La présente invention concerne un moule pour la vulcanisation d'un pneumatique et un procédé de vulcanisation d'une ébauche crue de pneumatique.

Dans ce qui suit, on appelle axe d'un pneumatique son axe de révolution. Cet axe définit une direction axiale du moule en considérant le pneumatique dans le moule.

Il est connu de fabriquer un pneumatique en vulcanisant une ébauche crue du pneumatique. Pour cela, on place l'ébauche dans un moule du type comprenant :
- au moins un organe axial portant au moins une surface de moulage d'un flanc du pneumatique,
- des segments radiaux portant chacun au moins une surface de moulage d'une bande de roulement du pneumatique,
- des moyens de liaison de l'organe axial avec les segments radiaux comprenant des premières surfaces de blocage radial et axial portées par l'organe axial destinées à coopérer avec des secondes surfaces de blocage radial et axial, complémentaires des premières surfaces de blocage, portées par chaque segment radial, les premières et secondes surfaces de blocage étant déplaçables les unes par rapport aux autres, entre
   o une position d'ouverture du moule dans laquelle les surfaces complémentaires de blocage sont séparées, et
   o une position de fermeture du moule dans laquelle les surfaces complémentaires de blocage coopèrent entre elles.

Un moule de ce type comporte des premier et second organes axiaux portant respectivement des surfaces de moulage de premier et second flancs du pneumatique et est décrit, par exemple, dans EP-A-1 0 436 495.

Habituellement, en vue de vulcaniser une ébauche crue de pneumatique, on place cette ébauche dans un moule du type précité de la façon suivante.

Initialement, on place l'ébauche au contact des organes axiaux puis on relie chaque organe axial avec les segments radiaux notamment en déplaçant axialement les premières et secondes surfaces de blocage les unes par rapport aux autres entre les positions d'ouverture et de fermeture du moule.

Généralement, dans un moule classique, l'ébauche crue est plaquée contre les surfaces de moulage des organes axiaux et des segments radiaux du moule au moyen d'une membrane souple sous pression coopérant avec la surface interne de l'ébauche. Dans le moule faisant l'objet de la publication EP-A-1 0436 495, la pression de la membrane, nécessaire au moulage du pneumatique, a également pour effet de solliciter les surfaces complémentaires de blocage dans leur position de coopération et ainsi de maintenir le moule fermé. La pression de moulage participant au blocage de la fermeture du moule, le moule classique est dit autobloquant.

Or, dans un moule du type précité, les surfaces de moulage des flancs, portées par les premier et second organes axiaux, sont solidaires des premières surfaces de blocage radial et axial, également portées par les premier et second organes axiaux. De ce fait, le déplacement axial des premières et secondes surfaces de blocage les unes par rapport aux autres, lors de la fermeture et de l'ouverture du moule, provoque un déplacement relatif entre, d'une part, les surfaces de moulage de flanc solidaires des premières surfaces de blocage et, d'autre part, les surfaces de moulage de bande de roulement portées par les segments radiaux. Ce déplacement relatif provoque la formation d'une empreinte indésirable sur chaque flanc de l'ébauche, avant sa vulcanisation, par déformation plastique de ce flanc.

L'invention a notamment pour but d'éviter, avant la vulcanisation de l'ébauche crue, la formation d'empreintes indésirables sur les flancs de cette ébauche.

A cet effet, l'invention a pour objet un moule du type comprenant :
- au moins un organe axial portant au moins une surface de moulage d'un flanc du pneumatique,
- des segments radiaux portant chacun au moins une surface de moulage d'une bande de roulement du pneumatique,
- des moyens de liaison de l'organe axial avec les segments radiaux comprenant des premières surfaces de blocage radial et axial portées par l'organe axial destinées à coopérer avec des secondes surfaces de blocage radial et axial, complémentaires des premières surfaces de blocage, portées par chaque segment radial, les premières et secondes surfaces de blocage étant déplaçables les unes par rapport aux autres, entre
   o une position d'ouverture du moule dans laquelle les surfaces complémentaires de blocage sont séparées, et
   o une position de fermeture du moule dans laquelle les surfaces complémentaires de blocage coopèrent entre elles,
**caractérisé en ce que** chaque surface de moulage du flanc est solidaire d'une partie fixe de l'organe axial, les premières surfaces de blocage étant solidaires d'au moins un organe de blocage monté dans l'organe axial en étant mobile par rapport à la partie fixe.

Les premières surfaces de blocage étant mobiles par rapport à chaque surface de moulage du flanc, lors de la fermeture du moule, le déplacement de ces premières surfaces de blocage n'entraîne pas celui de la surface de moulage du flanc et ne provoque pas de formation d'empreinte sur l'ébauche crue.

Suivant une caractéristique optionnelle du moule selon l'invention, l'organe de blocage est monté dans l'organe axial en étant déplaçable axialement par rapport à la partie fixe entre les positions d'ouverture et de fermeture du moule.

De préférence, les premières surfaces de blocage radial et axial sont formées par des gorge et nervure annulaires ménagées dans l'organe de blocage, et les secondes surfaces de blocage radial et axial sont formées par des segments de gorge et nervure annulaires ménagées dans chaque segment radial.

Ces gorges et nervures, simples à réaliser, coopèrent efficacement entre elles de façon à bloquer radialement et axialement chaque organe axial avec les segments radiaux.

Suivant une autre caractéristique optionnelle du moule selon l'invention, l'organe axial comprend au moins un organe de calage de l'organe de blocage en position de fermeture du moule.

En empêchant, lors de la vulcanisation du pneumatique, le retour de l'organe de blocage dans la position d'ouverture du moule, l'organe de calage maintient les surfaces complémentaires de blocage dans leur position de coopération et ainsi maintient le moule fermé.

Suivant une autre caractéristique optionnelle du moule selon l'invention, l'organe de calage est monté déplaçable radialement, dans un logement ménagé dans la partie fixe de l'organe axial, entre
- une position escamotée dans le logement et
- une position de calage dans laquelle l'organe de calage est intercalé entre une surface axiale de la partie fixe, prolongeant ce logement, et une surface d'extrémité axiale de l'organe de blocage.

La position escamotée de l'organe de calage autorise le déplacement axial de l'organe de blocage entre ses positions d'ouverture et de fermeture du moule. La position de calage de l'organe de calage interdit le retour de l'organe de blocage dans la position d'ouverture du moule en maintenant ainsi ce moule fermé.

Suivant une autre caractéristique optionnelle du moule selon l'invention, l'organe de calage est monté déplaçable radialement sur une surface externe d'extrémité axiale de la partie fixe de l'organe axial, entre
- une position dégagée de l'organe de blocage et
- une position de calage dans laquelle l'organe de calage est intercalé entre cette surface externe et une surface axiale de calage de l'organe de blocage.

Un tel organe de calage est facilement accessible de l'extérieur du moule. En position dégagée, l'organe de calage peut être séparé du moule et autorise le déplacement axial de l'organe de blocage entre ses positions d'ouverture et de fermeture du moule.

Suivant une autre caractéristique optionnelle du moule selon l'invention, l'organe de calage a une forme générale de couronne coaxiale au pneumatique, l'organe de blocage comportant des saillies axiales, réparties circonférentiellement, alternant avec des enfoncements axiaux, l'organe de calage comportant des saillies et enfoncements complémentaires des saillies et enfoncements de l'organe de blocage, les organe de blocage et organe de calage étant mobiles l'un par rapport à l'autre entre
- une position de superposition axiale des saillies des organe de blocage et organe de calage et
- une position d'emboîtement des saillies des organe de blocage et organe de calage dans des enfoncements complémentaires respectivement des organe de calage et organe de blocage.

Grâce à ces moyens, l'ensemble formé par les organe de blocage et organe de calage a une épaisseur variable telle que lorsque les saillies sont superposées axialement, le moule est en position de fermeture.

Suivant une autre caractéristique optionnelle du moule selon l'invention, l'organe de blocage est monté dans l'organe axial, déplaçable en rotation, par rapport à la partie fixe, entre les positions d'ouverture et de fermeture du moule.

De préférence, les premières surfaces de blocage sont destinées à coopérer avec les secondes surfaces de blocage conformément à une liaison de type baïonnette,
- les premières surfaces de blocage radial et axial étant formées par une surface annulaire, ménagée dans l'organe de blocage, munie de saillies axiales réparties circonférentiellement sur une partie radialement externe de cette surface annulaire,
- les secondes surfaces de blocage radial et axial étant formées par des segments de surface annulaire ménagés chacun dans un segment radial correspondant, chaque segment de surface annulaire étant muni de saillies axiales réparties circonférentiellement sur une partie radialement interne du segment de surface annulaire, et
- les saillies alternant avec des créneaux.

De telles surfaces de blocage destinées à coopérer entre elles conformément à une liaison de type baïonnette ont un encombrement axial réduit et ne requièrent pas d'organe de calage supplémentaire.

Suivant une autre caractéristique optionnelle du moule selon l'invention, l'organe de blocage a une forme générale de couronne coaxiale au pneumatique en considérant le pneumatique dans le moule.

Un tel organe de blocage est facile à guider axialement ou en rotation sur la partie fixe de l'organe axial.

Suivant une autre caractéristique optionnelle du moule selon l'invention, ce moule comprend des premier et second organes axiaux portant respectivement des surfaces de moulage de premier et second flancs du pneumatique, les premières surfaces de blocage étant solidaires d'au moins un organe de blocage monté dans chaque organe axial en étant mobile par rapport à la partie fixe de cet organe axial.

L'invention a également pour objet un procédé de vulcanisation d'une ébauche crue d'un pneumatique au moyen d'un moule comprenant
- au moins un organe axial portant au moins une surface de moulage d'un flanc du pneumatique,
- des segments radiaux portant au moins une surface de moulage d'une bande de roulement du pneumatique,
- des moyens de liaison de l'organe axial avec les segments radiaux, le procédé étant du type dans lequel
- on place l'ébauche crue au contact de l'organe axial, puis
- on relie cet organe axial avec les segments radiaux à l'aide des moyens de liaison,
caractérisé en ce que, le moule étant tel que défini ci-dessus, on relie l'organe axial avec les segments radiaux à l'aide des moyens de liaison en déplaçant les premières et secondes surfaces de blocage les unes par rapport aux autres, depuis la position d'ouverture vers la position de fermeture du moule, ceci en maintenant constante la position axiale de la partie fixe de l'organe axial par rapport aux segments radiaux.

La position axiale de la partie fixe de l'organe axial par rapport aux segments radiaux demeurant constante lors du déplacement axial des premières et secondes surfaces de blocage les unes par rapport aux autres, il n'y a pas de déplacement relatif entre, d'une part, chaque surface de moulage de flanc solidaire de la partie fixe de l'organe axial et, d'autre part, chaque surface de moulage de bande de roulement portée par les segments radiaux. Il n'y a donc pas de formation d'empreintes indésirables sur les flancs de l'ébauche crue du pneumatique.

Suivant une autre caractéristique optionnelle du procédé selon l'invention, le moule étant tel que décrit ci-dessus, après avoir déplacé axialement les premières et secondes surfaces de blocage les unes par rapport aux autres depuis la position d'ouverture vers la position de fermeture du moule, on cale l'organe de blocage en position de fermeture du moule par déplacement radial de l'organe de calage.

L'organe de calage permet, à l'instar de la pression de la membrane d'un moule classique, de solliciter les surfaces complémentaires de blocage dans leur position de coopération et ainsi de maintenir le moule fermé.

L'invention a également pour objet un pneumatique caractérisé en ce qu'il est obtenu par un procédé tel que défini ci-dessus.

L'invention sera mieux comprise à la lecture de la description qui va suivre, donnée uniquement à titre d'exemple non limitatif et faite en se référant aux dessins dans lesquels :
- la figure 1 est une vue en coupe axiale d'un moule selon un premier mode de réalisation de l'invention,
- les figures 2 à 4 sont des demi-vues analogues à la figure 1 montrant le moule dans différentes étapes de fermeture,
- la figure 5 est une demi-vue en coupe axiale d'un moule selon un second mode de réalisation de l'invention,
- la figure 6 est une demie vue en coupe axiale d'un moule selon un troisième mode de réalisation de l'invention,
- les figures 7 à 9 sont des vues en perspectives d'une partie de l'organe de blocage et de l'organe de calage du moule de la figure 6 dans différentes étapes de fermeture du moule,
- les figures 10 et 11 sont des demi-vues en coupe axiale d'un moule selon un quatrième mode de réalisation de l'invention respectivement fermé et ouvert,
- les figures 12 et 13 sont des vues en perspectives d'une partie d'un segment radial et de l'organe de blocage du moule des figures 10 et 11.

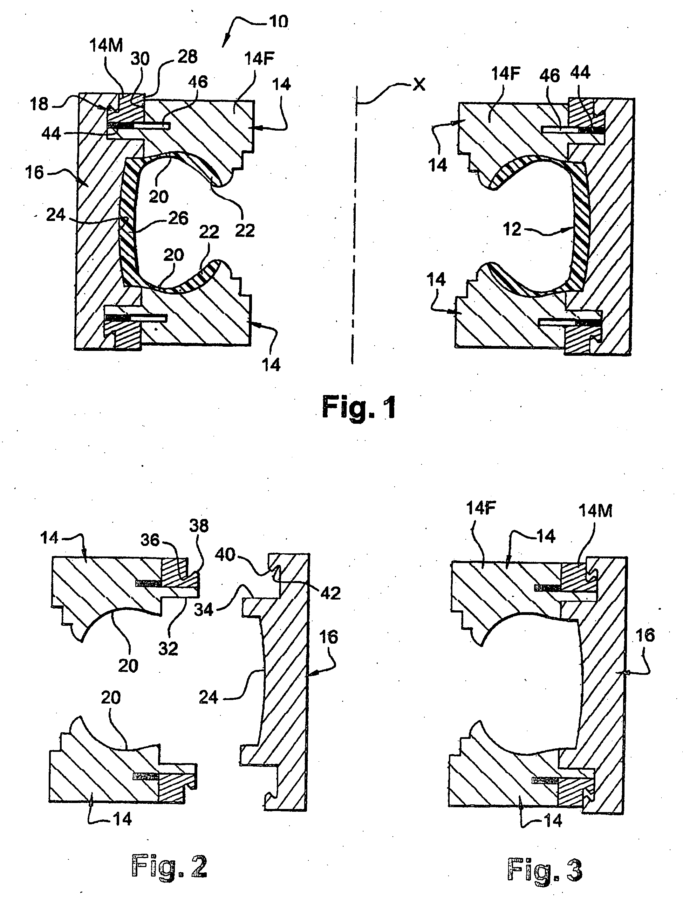

On a représenté sur les figures 1 à 4 un moule selon un premier mode de réalisation de l'invention, désigné par la référence générale 10. Ce moule 10 est destiné à la vulcanisation d'une ébauche pour obtenir un pneumatique 12 qui n'est représenté que sur la figure 1.

Dans l'exemple décrit, le moule 10 a une forme générale de révolution autour d'un axe X coïncidant avec l'axe de révolution du pneumatique 12 lorsque ce dernier est logé dans le moule 10 comme cela est représenté sur la figure 1.

Le moule comprend des premier et second organes axiaux 14, des segments radiaux 16 ainsi que des moyens 18 de liaison de chaque organe axial 14 avec les segments radiaux 16.

Chaque organe axial 14 a une forme générale de révolution et porte une surface de révolution 20 pour le moulage d'un flanc correspondant 22 du pneumatique. Les segments radiaux 16 portent chacun un segment d'une surface de révolution 24 pour le moulage d'une bande de roulement 26 du pneumatique 12.

Chaque organe axial 14 comprend une partie 14F fixe, appelée coquille, et une partie 14 M, dite mobile, montée mobile axialement par rapport à la partie fixe 14F.

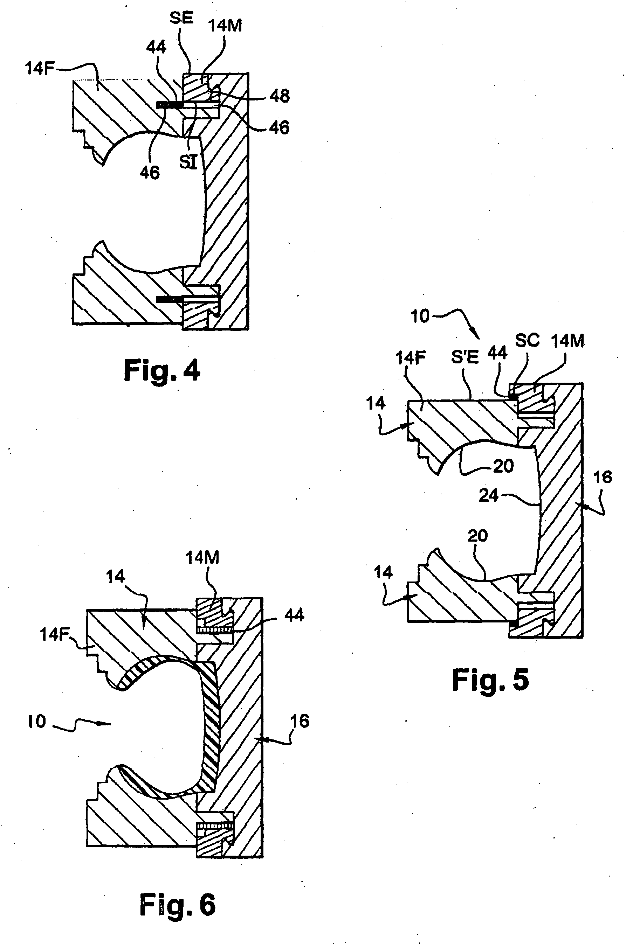

Dans l'exemple décrit, la partie mobile 14M a une forme générale de couronne coaxiale au pneumatique 12 en considérant ce pneumatique 12 dans le moule 10. La partie mobile 14M est délimitée axialement par des première SI et seconde SE surfaces d'extrémité (voir figure 4). La partie mobile 14M est guidée axialement par rapport à la partie fixe 14F à la l'aide de surfaces complémentaires de guidage axial cylindriques 28, 30 autorisant un déplacement axial de la partie mobile 14M par rapport à la partie fixe par coulissement.

On notera que la surface 20 de moulage de flanc de chaque organe axial 14 est solidaire de la partie fixe 14F ce cet organe 14.

La partie fixe 14F de chaque organe axial 14 comprend un épaulement 32 destiné à coopérer avec un épaulement complémentaire 34 de chaque segment radial 16. Ces épaulements complémentaires 32, 34 forment des surfaces complémentaires d'appui axial et de guidage radial mutuel de l'organe axial 14 avec chaque segment radial 16.

Les moyens de liaison 18 comprennent des premières surfaces de blocage radial et axial formées par des gorge 36 et nervure 38 annulaires (voir figure 2) ménagées dans la partie mobile 14M de l'organe axial. Les premières surfaces de blocage 36, 38 sont donc solidaires de la partie mobile 14M, cette dernière formant un organe de blocage.

Les gorge 36 et nervure 38 annulaires coopèrent avec des segments de gorge 40 et nervure 42 annulaires complémentaires ménagées dans chaque segment radial 16, de façon à bloquer, radialement et axialement, chaque organe axial 14 avec les segments radiaux 16.

Les premières surfaces de blocage 36, 38 portées par chaque organe axial 14 sont donc destinées à coopérer avec des secondes surfaces de blocage radial et axial, complémentaires des premières surfaces de blocage, formées par les segments de gorge 40 et nervure 42 annulaires solidaires de chaque segment radial 16.

Ainsi, les premières 36, 38 et secondes 40, 42 surfaces de blocage sont déplaçables axialement les unes par rapport aux autres, entre
o une position d'ouverture du moule, telle que représentée sur les figures 2 et 3, dans laquelle les surfaces complémentaires de blocage 36 à 42 sont séparées, et
o une position de fermeture du moule, telle que représentée sur les figures 1 et 4, dans laquelle les surfaces complémentaires de blocage 36 à 42 coopèrent entre elles.

La partie mobile 14M et les premières 36, 38 surfaces de blocage que porte cette partie mobile 14M sont donc déplaçables axialement entre les positions d'ouverture et de fermeture du moule représentées respectivement aux figures 2 et 3 et aux figures 1 et 4.

Chaque organe axial 14 comprend au moins un organe 44 de calage de la partie mobile 14M en position de fermeture du moule telle que représentée sur la figure 1.

Dans le premier mode de réalisation de l'invention représenté sur les figures 1 à 4, l'organe de calage 44 est monté déplaçable radialement, dans un logement 46 ménagé dans la partie fixe 14F de l'organe axial 14, entre
- une position escamotée dans le logement 46, telle que représentée sur les figures 2 à 4, et
- une position de calage telle que représentée sur la figure 1.

En position de calage, l'organe de calage 44 est intercalé entre une surface axiale 48 de la partie fixe 14F, prolongeant le logement 46, et la surface d'extrémité axiale SI de la partie mobile 14M.

Les principaux aspects d'un procédé de vulcanisation d'une ébauche crue d'un pneumatique au moyen du moule 10 selon le premier mode de réalisation de l'invention vont à présent être décrits.

Tout d'abord, on place l'ébauche crue de pneumatique entre les deux organes axiaux 14 du moule 10, de façon que cette ébauche soit en contact avec ces organes axiaux 14 alors que les segments radiaux 16 sont écartés radialement des organes axiaux 14, comme cela est représenté sur la figure 2.

Puis, alors que chaque organe de calage 46 est dans sa position escamotée dans le logement 46 et chaque partie mobile 14M est en position d'ouverture du moule 10, on rapproche radialement les segments radiaux 16 vers les organes axiaux 14 jusqu'à la position représentée sur la figure 3. Au cours de ce rapprochement, les épaulements complémentaires 32, 34 participent au guidage radial mutuel de chaque organe axial 14 avec chaque segment radial 16.

Ensuite, on déplace axialement la partie mobile 14M de chaque organe axial 14 vers sa position de fermeture du moule 10 telle que représentée sur la figure 4, à l'aide de moyens classiques.

Ceci a pour effet de déplacer axialement les premières 36, 38 et secondes 40, 42 surfaces de blocage les unes par rapport aux autres, depuis la position d'ouverture vers la position de fermeture du moule 10 et, par conséquent, de relier les organe axiaux 14 aux segments radiaux 16.

On notera que le déplacement axial relatif des premières 36, 38 et secondes 40, 42 surfaces de blocage se fait en maintenant constante la position axiale de la partie fixe 14F de chaque organe axial 14 par rapport aux segments radiaux 16.

Enfin, on cale la partie mobile 14M de chaque organe axial 14 en position de fermeture du moule 10 par déplacement radial de l'organe de calage 46 depuis sa position escamotée vers sa position de calage telle que représentée sur la figure 1.

On a représenté sur la figures 5 un moule selon un second mode de réalisation de l'invention. Sur cette figure 5, les éléments analogues à ceux représentés sur les figures 1 à 4 sont désignés par des références identiques.

Dans ce mode de réalisation, l'organe de calage 44 est monté déplaçable radialement sur une surface externe S'E d'extrémité axiale de la partie fixe 14F de l'organe axial 14, entre
- une position dégagée de la partie mobile 14M formant organe de blocage et
- une position de calage, telle que représentée sur la figure 5, dans laquelle l'organe de calage 44 est intercalé entre cette surface externe S'E et un épaulement radialement interne de la partie mobile 14M formant une surface axiale SC de calage de cette partie mobile 14M.

L'organe de calage pourra avoir une forme générale de couronne segmentée, coaxiale à l'axe X du moule.

Les principaux aspects d'un procédé de vulcanisation d'une ébauche crue d'un pneumatique au moyen du moule 10 selon le second mode de réalisation de l'invention se déduisent mutatis mutandis du procédé décrit précédemment avec le moule 10 selon le premier mode de réalisation de l'invention.

On a représenté sur la figure 6 un moule selon un troisième mode de réalisation de l'invention. Sur cette figure 6, les éléments analogues à ceux représentés sur les figures 1 à 5 sont désignés par des références identiques.

Dans ce troisième mode de réalisation, l'organe de blocage 14M comporte des saillies axiales 62B, réparties circonférentiellement, alternant avec des enfoncements axiaux 64B.

L'organe de calage 44 a une forme générale de couronne coaxiale au pneumatique et comporte des saillies 62C et enfoncements 64C complémentaires des saillies 62B et enfoncements 64B de l'organe de blocage 14M.

Les organe de blocage 14M et organe de calage 44 sont mobiles l'un par rapport à l'autre entre
- une position de superposition axiale des saillies 62B et 62C des organe de blocage 14M et organe de calage 44 et
- une position d'emboîtement des saillies 62B et 62C des organe de blocage 14M et organe de calage 44 dans des enfoncements complémentaires 64C et 64B respectivement des organe de calage 44 et organe de blocage 14M.

Les principaux aspects d'un procédé de vulcanisation d'une ébauche crue d'un pneumatique au moyen du moule selon le troisième mode de réalisation de l'invention vont à présent être décrits.

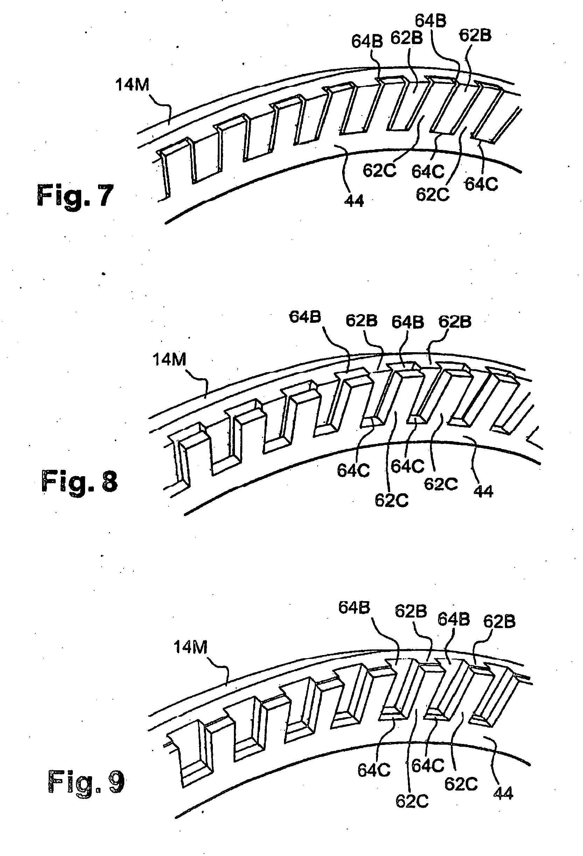

Une fois l'ébauche crue de pneumatique placée entre les deux organes axiaux 14 du moule, on déplace axialement l'organe de blocage 14M de la position d'emboitement telle que représentée sur la figure 7 vers une position intermédiaire dans laquelle les saillies 62B et 62C sont respectivement décalées axialement par rapport aux enfoncements 64C et 62C. Cette position intermédiaire est représentée sur la figure 8.

Puis, on fait pivoter l'organe de blocage 14M par rapport à l'organe de calage 44 autour de l'axe du pneumatique pour atteindre la position de superposition telle que représentée sur la figure 9 correspondant à la position de fermeture du moule.

Une variante de ce mode de réalisation pourrait être d'utiliser une liaison vis-écrou entre les parties fixe 14F et mobile 14M de l'organe axial, le déplacement par vissage/dévissage comportant un déplacement axial.

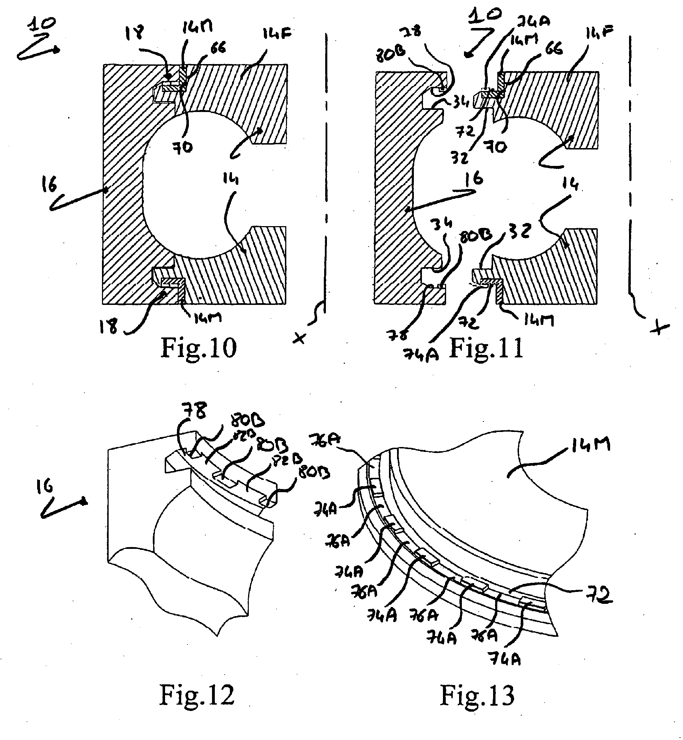

On a représenté sur les figures 10 à 13 un moule selon un quatrième mode de réalisation de l'invention. Sur ces figures, les éléments analogues à ceux représentés sur les figures 1 à 9 sont désignés par des références identiques.

Dans ce quatrième mode de réalisation, la partie mobile 14 M (organe de blocage) de chaque organe axial 14 du moule est montée mobile en rotation autour de l'axe X sur la partie fixe 14F de cet organe axial 14.

La partie mobile 14M a une forme générale de couronne coaxiale au pneumatique 12 en considérant ce pneumatique 12 dans le moule 10. La partie mobile 14M est guidée en rotation par rapport à la partie fixe 14F à la l'aide notamment de surfaces complémentaires de guidage cylindriques 66, 70. A la différence des précédents modes de réalisation, la partie mobile 14M n'est pas destinée à être déplacée axialement par rapport à la partie fixe 14F.

Dans le quatrième mode de réalisation, les premières surfaces de blocage radial et axial des moyens de liaison 18 sont formées par une surface annulaire 72, ménagée dans la partie mobile 14M de l'organe axial, munie de saillies axiales 74A réparties circonférentiellement sur une partie radialement externe de cette surface annulaire 72 (voir figures 10, 11 et 13). Ces saillies 74A alternent avec des créneaux 76A.

Par ailleurs, les secondes surfaces de blocage radial et axial, complémentaires des premières surfaces de blocage, sont formées par des segments de surface annulaire 78 ménagés chacun dans un segment radial 16 correspondant. Chaque segment de surface annulaire 78 est muni de saillies axiales 80B réparties circonférentiellement sur une partie radialement interne du segment de surface annulaire 78 (voir figures 10, 11 et 12). Ces saillies 80B alternent avec des créneaux 82B.

Les premières surfaces de blocage 72, 74A portées par chaque organe axial 14 sont destinées à coopérer, conformément à une liaison de type baïonnette, avec les secondes surfaces de blocage 78, 80B de chaque segment radial 16.

En faisant tourner la partie mobile 14M par rapport à la partie fixe 14F, on déplace en rotation les premières surfaces de blocage par rapport aux secondes surfaces de blocage, entre
- une position de décalage angulaire des saillies 74A, 80B entre elles autorisant le déplacement relatif radial de ces saillies 74A, 80B à travers les créneaux 76A, 82B complémentaires, et
- une position de mise en butée radiale des saillies 74A, 80B entre elles, dans laquelle les saillies 74A de chaque partie mobile 14M entoure les saillies 80B correspondantes des segments radiaux 16.

Dans la position de décalage angulaire des saillies 74A, 80B, les organes axiaux 14 peuvent être séparés des segments radiaux 16, de façon que le moule 10 est ouvert, comme cela est représenté sur la figure 11.

Dans la position de mise en butée radiale des saillies 74A, 80B, les organes axiaux 14 et les segments radiaux 16 sont bloqués radialement et axialement entre eux, de façon que le moule 10 est fermé, comme cela est représenté sur la figure 10.

De façon analogue aux modes de réalisation précédents, partant de la configuration du moule représentée sur la figure 11 (moule 10 ouvert), pour fermer ce moule, on rapproche radialement les segments radiaux 16 vers les organes axiaux 14 jusqu'à la position représentée sur la figure 10.

Au cours de ce rapprochement, la partie mobile 14M est dans sa position de décalage angulaire des saillies 74A, 80B entre elles autorisant le déplacement relatif radial de ces saillies 74A, 80B à travers les créneaux 76A, 82B complémentaires. Par ailleurs, les épaulements complémentaires 32, 34 participent au guidage radial mutuel des organes axiaux 14 et segments radiaux 16.

Ensuite, on fait tourner la partie mobile 14M de façon à la placer dans sa position de mise en butée radiale des saillies 74A, 80B entre elles, ce qui a pour effet de bloquer radialement et axialement entre eux les organes axiaux 14 et les segments radiaux 16.

## Revendications

1. Moule pour la vulcanisation d'un pneumatique, du type comprenant :
- au moins un organe axial (14) portant au moins une surface (20) de moulage d'un flanc (22) du pneumatique,
- des segments radiaux (16) portant chacun au moins une surface (24) de moulage d'une bande de roulement (26) du pneumatique,
- des moyens de liaison de l'organe axial avec les segments radiaux comprenant des premières surfaces (36, 38) de blocage radial et axial portées par l'organe axial (14) destinées à coopérer avec des secondes surfaces (40, 42) de blocage radial et axial, complémentaires des premières surfaces de blocage (36, 38), portées par chaque segment radial (16), les premières et secondes surfaces de blocage (36, 38, 40, 42 ; 72, 74A, 78, 80B) étant déplaçables les unes par rapport aux autres, entre
○ une position d'ouverture du moule (10) dans laquelle les surfaces complémentaires de blocage sont séparées (36, 38, 40, 42 ; 72, 74A, 78, 80B), et
○ une position de fermeture du moule (10) dans laquelle les surfaces complémentaires de blocage (36, 38, 40, 42 ; 72, 74A, 78, 80B) coopèrent entre elles,
**caractérisé en ce que** chaque surface (20) de moulage du flanc est solidaire d'une partie fixe (14F) de l'organe axial (14), les premières surfaces de blocage (36, 38 ; 72, 74A) étant solidaires d'au moins un organe de blocage (14M) monté dans l'organe axial (14) en étant mobile par rapport à la partie fixe (14F).

2. Moule selon la revendication 1, dans lequel l'organe de blocage (14M) est monté dans l'organe axial (14) en étant déplaçable axialement par rapport à la partie fixe (14F) entre les positions d'ouverture et de fermeture du moule (10).

3. Moule selon la revendication 2, dans lequel les premières surfaces de blocage radial et axial sont formées par des gorge (36) et nervure (38) annulaires ménagées dans l'organe de blocage (14M), et les secondes surfaces de blocage radial et axial sont formées par des segments de gorge (40) et nervure (42) annulaires ménagées dans chaque segment radial (16).

4. Moule selon la revendication 2 ou 3, dans lequel l'organe axial (14) comprend au moins un organe de calage (44) de l'organe de blocage (14M) en position de fermeture du moule (10).

5. Moule selon la revendication 4, dans lequel l'organe de calage (44) est monté déplaçable radialement, dans un logement (46) ménagé dans la partie fixe (14F) de l'organe axial (14), entre
- une position escamotée dans le logement (46) et
- une position de calage dans laquelle l'organe de calage (44) est intercalé entre une surface axiale (48) de la partie fixe (14F), prolongeant ce logement (46), et une surface (S1) d'extrémité axiale de l'organe de blocage (14M).

6. Moule selon la revendication 4, dans lequel l'organe de calage (44) est monté déplaçable radialement sur une surface externe (S'E) d'extrémité axiale de la partie fixe (14F) de l'organe axial (14), entre
- une position dégagée de l'organe de blocage (14M) et
- une position de calage dans laquelle l'organe de calage (44) est intercalé entre cette surface externe (S'E) et une surface axiale (SC) de calage de l'organe de blocage (14M).

7. Moule selon la revendication 4, dans lequel l'organe de calage (44) a une forme générale de couronne coaxiale au pneumatique, l'organe de blocage (14M) comportant des saillies axiales (62B), réparties circonférentiellement, alternant avec des enfoncements axiaux (64B), l'organe de calage (44) comportant des saillies (62C) et enfoncements (64C) complémentaires des saillies (62B) et enfoncements (64B) de l'organe de blocage (14M), les organe de blocage (14M) et organe de calage (44) étant mobiles l'un par rapport à l'autre entre
- une position de superposition axiale des saillies (62B) et (62C) des organe de blocage (14M) et organe de calage (44) et
- une position d'emboîtement des saillies (62B) et (62C) des organe de blocage (14M) et organe de calage (44) dans des enfoncements complémentaires (64C) et (64B) respectivement des organe de calage (44) et organe de blocage (14M).

8. Moule selon la revendication 1, dans lequel l'organe de blocage (14M) est monté, dans l'organe axial (14), déplaçable en rotation, par rapport à la partie fixe (14F), entre les positions d'ouverture et de fermeture du moule (10).

9. Moule selon la revendication 8, dans lequel les premières surfaces de blocage sont destinées à coopérer avec les secondes surfaces de blocage conformément à une liaison de type baïonnette,
- les premières surfaces de blocage radial et axial étant formées par une surface annulaire (72), ménagée dans l'organe de blocage (14M), munie de saillies axiales (74A) réparties circonférentiellement sur une partie radialement externe de cette surface annulaire (72),
- les secondes surfaces de blocage radial et axial étant formées par des segments de surface annulaire (78) ménagés chacun dans un segment radial (16) correspondant, chaque segment de surface annulaire (78) étant muni de saillies axiales (80B) réparties circonférentiellement sur une partie radialement interne du segment de surface annulaire (78), et
- les saillies (74A, 80B) alternant avec des créneaux (76A, 82B).

10. Moule selon l'une quelconque des revendications précédentes, dans lequel l'organe de blocage (14M) a une forme générale de couronne coaxiale au pneumatique (12) en considérant le pneumatique dans le moule (10).

11. Moule selon l'une quelconque des revendications précédentes, comprenant des premier et second organes axiaux (14) portant respectivement des surfaces (20) de moulage de premier et second flancs (22) du pneumatique, les premières surfaces de blocage (36, 38 ; 72, 74A) étant solidaires d'au moins un organe de blocage (14M) monté dans chaque organe axial (14) en étant mobile par rapport à la partie fixe (14F) de cet organe axial (14).

12. Procédé de vulcanisation d'une ébauche crue d'un pneumatique (12) au moyen d'un moule (10) comprenant
- au moins un organe axial (14) portant au moins une surface (20) de moulage d'un flanc (22) du pneumatique,
- des segments radiaux (16) portant au moins une surface (24) de moulage d'une bande de roulement (26) du pneumatique,
- des moyens (36, 38, 40, 42 ; 72, 74A, 78, 80B) de liaison de l'organe axial (14) avec les segments radiaux (16),
le procédé étant du type dans lequel
- on place l'ébauche crue au contact de l'organe axial (14), puis
- on relie cet organe axial (14) avec les segments radiaux (16) à l'aide des moyens de liaison (36, 38, 40, 42 ; 72, 74A, 78, 80B),
**caractérisé en ce que,** le moule (10) étant selon l'une quelconque des revendications 1 à 11, on relie l'organe axial (14) avec les segments radiaux (16) à l'aide des moyens de liaison en déplaçant les premières et secondes surfaces de blocage (36, 38, 40, 42 ; 72, 74A, 78, 80B) les unes par rapport aux autres, depuis la position d'ouverture vers la position de fermeture du moule (10), ceci en maintenant constante la position axiale de la partie fixe (14F) de l'organe axial (14) par rapport aux segments radiaux (16).

13. Procédé selon la revendication 12, dans lequel, le moule (10) étant selon la revendication 3 ou 4, après avoir déplacé axialement les premières et secondes surfaces de blocage (36, 38, 40, 42 ; 72, 74A, 78, 80B) les unes par rapport aux autres depuis la position d'ouverture vers la position de fermeture du moule (10), on cale l'organe de blocage (14M) en position de fermeture du moule (10) par déplacement radial de l'organe de calage (44).

## Claims

1. A mold for vulcanizing a tire, of the type comprising:
· at least one axial member (14) carrying at least one surface (20) for molding a sidewall (32) of a tire;
· radial segments (16) each carrying at least one surface (24) for molding a tire tread (26);
· means for connecting the axial member with the radial segments, comprising first radial and axial locking surfaces (36, 38) carried by the axial member (14) which can cooperate with second radial and axial locking surfaces (40, 42), which are complementary to the first locking surfaces (36, 38), carried by each radial segment (16), the first and second locking surfaces (36, 38, 40, 42; 72, 74A, 78, 80B) being displaceable relative to each other, between:
· an open position of the mold (10) in which the complementary locking surfaces (36, 38, 40, 42; 72, 74A, 78, 80B) are separated; and
· a closed position of the mold (10) in which the complementary locking surfaces (36, 38, 40, 42; 72, 74A, 78, 80B) cooperate with each other;
the mold being **characterized in that** each sidewall molding surface (20) is integral with a fixed portion (14F) of the axial member (14), the first locking surfaces (36, 38) being integral with at least one locking member (14M) mounted in the axial member (14) and being movable relative to the fixed portion (14F).

2. A mold according to claim 1, in which the locking member (14M) is mounted in the axial member (14) to be axially displaceable relative to the fixed portion (14F) between the open and closed positions of the mold (10).

3. A mold according to claim 2, in which the first radial and axial locking surfaces are formed by annular grooves and ribs (36 and 38) provided in the locking member (14M), and the second radial and axial locking surfaces are formed by annular groove segments (40) and rib segments (42) provided in each radial segment (16).

4. A mold according to claim 2 or claim 3, in which the axial member (14) includes at least one wedging member (44) of the locking member (14M) for locking the mold (10) in the closed position.

5. A mold according to claim 4, in which the wedging member (44) is radially displaceably mounted in a housing (46) provided in the fixed portion (14F) of the axial member (14), between:
· a retracted position in the housing (46); and
· a wedged position in which the wedging member (44) is inserted between an axial surface (48) of the fixed portion (14F), extending said housing (46), and an axial end surface (SI) of the locking member (14M).

6. A mold according to claim 4, in which the wedging member (14) is radially displaceably mounted on an outer axial end surface (S'E) of the fixed portion (14F) of the axial member (14), between:
· a disengaged position of the locking member (14M); and
· a wedging position in which the wedging member (44) is inserted between said outer surface (S'E) and an axial surface (SC) to wedge the locking member (14M).

7. A mold according to claim 4, in which the wedging member (44) has the general form of a ring which is coaxial with the tire, the locking member (14M) comprising axial projections (62B) which are circumferentially distributed, alternating with axial indentations (64B), the wedging member (44) comprising projections (62C) and indentations (64C) which are complementary with the projections (62B) and indentations (64B) of the locking member (14M), the locking member (14M) and the wedging member (44) being movable relative to each other between:
· a position in which the projections (62B) and (62C) of the locking member (14M) and the wedging member (44) are axially superimposed; and
· a position in which the projections (62B) and (62C) of the locking member (14M) and the wedging member (44) are fitted into complementary indentations (64C) and (64B) of the wedging member (44) and locking member (14M) respectively.

8. A mold according to claim 1, in which the locking member (14M) is mounted in the axial member (14) to be displaceable in rotation relative to the fixed portion (14F) between the open and closed positions of the mold (10).

9. A mold according to claim 8, in which the first locking surfaces are designed to co-operate with the second locking surfaces in compliance with a bayonet type connection,
· the first radial and axial locking surfaces being formed by an annular surface (72) formed in the locking member (14M), provided with axial projections (74A) that are circumferentially distributed over a radially outer portion of said annular surface (72);
· the second radial and axial locking surfaces being formed by annular surface segments (78) each provided in a corresponding radial segment (16), each annular surface segment (78) being provided with axial projections (80B) distributed circumferentially over a radially inner portion of the annular surface segment (78); and
· the projections (74A, 80B) alternating with indentations (76A, 82B).

10. A mold according to any preceding claim, in which the locking member (14M) has the general form of a ring which is coaxial with the tire (12) assuming that the tire is in the mold (10).

11. A mold according to any preceding claim, including first and second axial members (14) respectively carrying surfaces (20) for molding the first and second tire sidewalls (22), the first locking surfaces (36, 38; 72, 74A) being integral with at least one locking member (14M) mounted in each axial member (14) and being movable relative to the fixed portion (14F) of said axial member (14).

12. A method of vulcanizing a green tire blank (12) using a mold (10) comprising:
· at least one axial member (14) carrying at least one surface (20) for molding a sidewall (22) of a tire;
· radial segments (16) carrying at least one surface (24) for molding a tread (26) of a tire; and
· means (36, 38, 40, 42; 72, 74A, 78, 80B) for connecting the axial member (14) with the radial segments (16);
the method being of the type in which:
· the green blank is placed in contact with the axial member (14); then
· said axial member (14) is connected with the radial segments (16) using the connection means (36, 38, 40, 42; 72, 74A, 78, 80B);
the method being **characterized in that** since the mold (10) is as defined in any one of claims 1 to 11, the axial member (14) is connected with the radial segments (16) using connection means by displacing the first and second locking surfaces (36, 38, 40, 42; 72, 74A, 78, 80B) relative to each other from an open position towards a closed position of the mold (10), while keeping the axial position of the fixed portion (14F) of the axial member (14) constant relative to the radial segments (16).

13. A method according to claim 12 in which, since the mold (10) is in accordance with claim 3 or claim 4, after having axially displaced the first and second locking surfaces (36, 38, 40, 42; 72, 74A, 78, 80B) relative to each other from the open position towards the closing position of the mold (10), the locking member (14M) is wedged in the closed position of the mold (10) by radial displacement of the wedging member (44).

## Patentansprüche

1. Form für die Vulkanisierung eines Reifens des Typs mit:
- wenigstens einem axialen Element (14), das wenigstens eine Fläche (20) zum Formen einer Seitenfläche (22) des Reifens trägt,
- radialen Segmenten (16), die jeweils wenigstens eine Fläche (24) zum Formen einer Lauffläche (26) des Reifens tragen,
- Mitteln zum Verbinden des axialen Elements mit den radialen Segmenten, welche von dem axialen Element (14) getragene erste radiale und axiale Verriegelungsflächen (36, 38) umfassen, die dazu vorgesehen sind, mit zu den ersten Verriegelungsflächen (36, 38) komplementären zweiten radialen und axialen Verriegelungsflächen (40, 42) zusammenzuwirken, die von jedem radialen Segment (16) getragen werden, wobei die ersten und zweiten Verriegelungsflächen (36, 38, 40, 42; 72, 74A, 78, 80B) im Verhältnis zueinander verschiebbar sind zwischen
· einer Öffnungsstellung der Form (10), in der die komplementären Verriegelungsflächen (36, 38, 40, 42; 72, 74A, 78, 80B) getrennt sind, und
· einer Schließstellung der Form (10), in der die komplementären Verriegelungsflächen (36, 38, 40, 42; 72, 74A, 78, 80B) zusammenwirken,
**dadurch gekennzeichnet, dass** jede Fläche (20) zum Formen der Seitenfläche mit einem ortsfesten Teil (14F) des axialen Elements (14) fest verbunden ist, wobei die ersten Verriegelungsflächen (36, 38; 72, 74A) mit wenigstens einem Verriegelungselement (14M) fest verbunden sind, welches in dem axialen Element (14) angebracht und bezüglich des ortsfesten Teils (14F) beweglich ist.

2. Form nach Anspruch 1, in der das Verriegelungselement (14M) in dem axialen Element (14) angebracht ist, wobei es bezüglich des ortsfesten Teils (14F) zwischen der Öffnungs- und Schließstellung der Form (10) axial verschiebbar ist.

3. Form nach Anspruch 2, in der die ersten radialen und axialen Verriegelungsflächen durch eine in dem Verriegelungselement (14M) angeordnete ringförmige Nut (36) und Rippe (38) gebildet sind und die zweiten radialen und axialen Verriegelungsflächen durch ringförmige Nut- (40) und Rippensegmente (42) gebildet sind, die in jedem radialen Segment (16) angeordnet sind.

4. Form nach Anspruch 2 oder 3, in der das axiale Element (14) wenigstens ein Element (44) zum Feststellen des Verriegelungselements (14M) in der Schließstellung der Form (10) umfasst.

5. Form nach Anspruch 4, in der das Feststellelement (44) in einer in dem ortsfesten Teil (14F) des axialen Elements (14) ausgebildeten Aufnahme (46) angebracht ist, wobei es radial verschiebbar ist zwischen
- einer Position, in der es in die Aufnahme (46) eingezogen ist, und
- einer festgestellten Position, in der das Feststellelement (44) zwischen einer axialen Fläche (48) des ortfesten Teils (14F), die diese Aufnahme (46) verlängert, und einer axialen Endfläche (S1) des Verriegelungselements (14M) eingefügt ist.

6. Form nach Anspruch 4, in der das Feststellelement (44) auf einer äußeren axialen Endfläche (S'E) des ortsfesten Teils (14F) des axialen Elements (14) angebracht ist, wobei es radial verschiebbar ist zwischen
- einer Position, in der es außerhalb des Verriegelungselements (14M) angeordnet ist, und
- einer festgestellten Position, in der das Feststellelement (44) zwischen dieser äußeren Fläche (S'E) und einer axialen Feststellungsfläche (SC) des Verriegelungselements (14M) eingefügt ist.

7. Form nach Anspruch 4, in der das Feststellelement (44) allgemein die Form eines zum Reifen koaxialen Kranzes aufweist, wobei das Verriegelungselement (14M) abwechselnd über den Umfang verteilte axiale Vorsprünge (62B) und axiale Vertiefungen (64B) aufweist, wobei das Feststellelement (44) zu den Vorsprüngen (62B) und Vertiefungen (64B) des Verriegelungselements (14M) komplementäre Vorsprünge (62C) und Vertiefungen (64C) aufweist, wobei das Verriegelungsorgan (14M) und das Feststellorgan (44) im Verhältnis zueinander beweglich sind zwischen
- einer Position, in der die Vorsprünge (62B) und (62C) des Verriegelungselements (14M) und des Feststellelements (44) axial übereinander gelagert sind, und
- einer Position, in der die Vorsprünge (62B) und (62C) des Verriegelungselements (14M) und des Feststellelements (44) in komplementäre Vertiefungen (64C) und (64B) des Feststellelements (44) bzw. Verriegelungselements (14M) eingreifen.

8. Form nach Anspruch 1, in der das Verriegelungselement (14M) in dem axialen Element (14) bezüglich des ortsfesten Teils (14F) zwischen der Öffnungs- und Schließstellung der Form (10) drehbar angebracht ist.

9. Form nach Anspruch 8, in der die ersten Verriegelungsflächen dazu vorgesehen sind, mit den zweiten Verriegelungsflächen gemäß einer Bajonettverbindung zusammenzuwirken,
- wobei die ersten radialen und axialen Verriegelungsflächen von einer in dem Verriegelungselement (14M) angeordneten ringförmigen Fläche (72) gebildet sind, die mit axialen Vorsprüngen (74A) versehen ist, welche auf einem radialen äußeren Teil dieser ringförmigen Fläche (72) über den Umfang verteilt sind,
- wobei die zweiten radialen und axialen Verriegelungsflächen von Segmenten mit ringförmiger Fläche (78) gebildet sind, die jeweils in einem entsprechenden radialen Segment (16) angeordnet sind, wobei jedes Segment mit ringförmiger Fläche (78) mit axialen Vorsprüngen (80B) versehen ist, die auf einem radialen inneren Teil des Segments mit ringförmiger Fläche (78) über den Umfang verteilt sind, und
- wobei die Vorsprünge (74A, 80B) mit Aussparungen (76A, 82B) alternieren.

10. Form nach einem der vorhergehenden Ansprüche, in der das Verriegelungselement (14M) allgemein die Form eines zu dem Reifen (12) koaxialen Kranzes aufweist, wenn man den Reifen in der Form (10) betrachtet.

11. Form nach einem der vorhergehenden Ansprüche, die ein erstes und zweites axiales Element (14) umfasst, die jeweils Flächen (20) zum Formen der ersten und zweiten Seitenfläche (22) des Reifens tragen, wobei die ersten Verriegelungsflächen (36, 38; 72, 74A) mit wenigstens einem Verriegelungselement (14M) fest verbunden sind, welches in jedem axialen Element (14) angebracht und bezüglich des ortsfesten Teils (14F) dieses axialen Elements (14) beweglich ist.

12. Verfahren zur Vulkanisierung eines Rohlings eines Reifens (12) mittels einer Form (10), die umfasst
- wenigstens ein axiales Element (14), welches wenigstens eine Fläche (20) zum Formen einer Seitenfläche (22) des Reifens trägt,
- radiale Segmente (16), die wenigstens eine Fläche (24) zum Formen einer Lauffläche (26) des Reifens tragen,
- Mittel (36, 38, 40, 42; 72, 74A, 78, 80B) zum Verbinden des axialen Elements (14) mit den radialen Segmenten (16),
wobei es sich um ein Verfahren des Typs handelt, bei dem
- der Rohling so angeordnet wird, dass er mit dem axialen Element (14) in Kontakt kommt, und anschließend
- dieses axiale Element (14) mit Hilfe der Verbindungsmittel (36, 38, 40, 42; 72, 74A, 78, 80B) mit den radialen Segmenten (16) verbunden wird,
**dadurch gekennzeichnet, dass,** während die Form (10) gemäß einem der Ansprüche 1 bis 11 ausgeführt ist, das axiale Element (14) mit Hilfe der Verbindungsmittel mit den radialen Segmenten (16) verbunden wird, indem die ersten und zweiten Verriegelungsflächen (36, 38, 40, 42; 72, 74A, 78, 80B) im Verhältnis zueinander aus der Öffnungsstellung in die Schließstellung der Form (10) verschoben werden, wobei die axiale Position des ortsfesten Teils (14F) des axialen Elements (14) bezüglich der radialen Segmente (16) konstant bleibt.

13. Verfahren nach Anspruch 12, bei dem, während die Form (10) nach den Ansprüchen 3 oder 4 ausgeführt ist, das Verriegelungselement (14M) durch eine radiale Verschiebung des Feststellelements (44) in der Schließstellung der Form (10) festgestellt wird, nachdem die ersten und zweiten Verriegelungsflächen (36, 38, 40, 42; 72, 74A, 78, 80B) im Verhältnis zueinander aus der Öffnungsstellung in die Schließstellung der Form (10) axial verschoben wurden.
